(19) Europäisches Patentamt
European Patent Office
Office européen des brevets

(11) EP 4 786 175 A1

(12) EUROPEAN PATENT APPLICATION
published in accordance with Art. 153(4) EPC

(43) Date of publication:
**05.08.2026 Bulletin 2026/32**

(21) Application number: **24872297.7**

(22) Date of filing: **25.09.2024**

(51) International Patent Classification (IPC):
***B32B 27/18*** (2006.01) ***B32B 27/30*** (2006.01)
***B32B 27/36*** (2006.01) ***C08J 7/04*** (2020.01)
***G02B 5/22*** (2006.01)

(52) Cooperative Patent Classification (CPC):
**B32B 27/18; B32B 27/30; B32B 27/36; C08J 7/04; G02B 5/22**

(86) International application number:
**PCT/JP2024/034227**

(87) International publication number:
**WO 2025/070511 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.09.2023 JP 2023164657**

(71) Applicant: **MITSUBISHI GAS CHEMICAL COMPANY, INC.**
**Chiyoda-ku**
**Tokyo 100-8324 (JP)**

(72) Inventors:
- **KAMEI, Shota**
  **Tokyo 125-8601 (JP)**
- **NAKAMURA, Hitomi**
  **Tokyo 125-8601 (JP)**

(74) Representative: **Hoffmann Eitle**
**Patent- und Rechtsanwälte PartmbB**
**Arabellastraße 30**
**81925 München (DE)**

# (54) MULTILAYERED BODY AND DUST-PROOF COVER FOR HEAD-UP DISPLAY

(57) Provided are a multilayered article and a dustproof cover for a head-up display using the multilayered article. A multilayered article having a base material layer and an infrared absorbing layer, the infrared absorbing layer containing an ultraviolet curable resin and tungsten oxide, the ultraviolet curable resin containing a component derived from a polyfunctional (meth)acrylate having a weight average molecular weight of 1000 or more, and the proportion of the tungsten oxide in the infrared absorbing layer being 25 to 50% by mass.

[Figure 1]

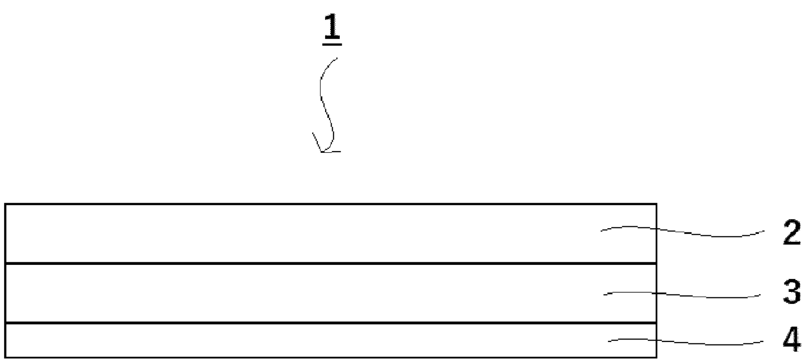


EP 4 786 175 A1

## Description

### Technical Field

The present invention relates to a multilayered article and a dustproof cover for a head-up display. More particularly, the present invention relates to a multilayered article having a polycarbonate resin layer and an acrylic resin layer.

### Background Art

Polycarbonate resins have, in addition to their excellent transparency, excellent processability and impact resistance as compared with glass, and there is no concern of toxic gas as compared with other plastic materials, so that they have been widely used in various fields and have been used also as thermoforming materials for vacuum forming, pressure forming, and the like.

In contrast, polycarbonate resins generally have low surface hardness, so that formed articles made of polycarbonate resins tend to suffer scratches on their surfaces. Then, when a polycarbonate resin is formed into a film, it is being studied to form a layer containing an acrylic resin or an infrared absorbing layer (protective layer) on the surface so as not to form a scratch the product surface. Such a multilayered article is described in Patent Literature 1 or Patent Literature 2.

### Citation List

### Patent Literature

Patent Literature 1: International Publication No. WO 2016/060100
Patent Literature 2: International Publication No. WO 2021/215435

## Summary of Invention

### Technical Problem

Here, such an infrared absorbing layer is generally blended with tungsten oxide in order to suppress transmission of near infrared rays. Furthermore, in order to enhance weather resistance, it is conceivable to increase the content of the tungsten oxide. However, the present inventors have studied and found that, depending on the content of the tungsten oxide, the interlayer adhesion (in particular, the adhesion of the infrared absorbing layer to the base material) may deteriorate.

The present invention is intended to solve such problems, and it is an object of the present invention to provide a multilayered article having excellent weather resistance and also having excellent interlayer adhesion, and a dustproof cover for a head-up display using the multilayered article.

### Solution to Problem

Based on the above problems, the present inventors have studied, and as a result, found that the above problems can be solved by using, as the ultraviolet curable resin in the infrared absorbing layer, a specific one together with the tungsten oxide.

Specifically, the above problems have been solved by the following means.

<1> A multilayered article having a base material layer and an infrared absorbing layer,

the infrared absorbing layer comprising an ultraviolet curable resin and tungsten oxide,
the ultraviolet curable resin comprising a component derived from a polyfunctional (meth)acrylate having a weight average molecular weight of 1000 or more, and
the proportion of the tungsten oxide in the infrared absorbing layer being 25 to 50% by mass.

<2> The multilayered article according to <1>, wherein the ultraviolet curable resin comprises a component derived from a polyfunctional urethane (meth)acrylate.

<3> The multilayered article according to <1> or <2>,

wherein the base material layer comprises an acrylic resin layer and a polycarbonate resin layer, and
wherein the infrared absorbing layer is positioned on a surface of the polycarbonate resin layer on a side opposite to the acrylic resin layer.

<4> The multilayered article according to any one of <1> to <3>, wherein the haze as measured in accordance with JIS K 7136 is 2.0% or less.
<5> The multilayered article according to any one of <1> to <4>, wherein the infrared absorbing layer comprises 30 to 50% by mass of the tungsten oxide.
<6> The multilayered article according to any one of <1> to <5>,

wherein the multilayered article further has a hard coat layer, and
wherein the infrared absorbing layer, the polycarbonate resin layer, the acrylic resin layer, and the hard coat layer are laminated in this order.

<7> The multilayered article according to <6>, comprising inorganic particles in the hard coat layer.
<8> The multilayered article according to any one of <1> to <7>, further having an antireflective layer.
<9> The multilayered article according to any one of <1> to <8>, further having a polarization layer.
<10> A dustproof cover for a head-up display, comprising the multilayered article according to any one of <1> to <9>.

Advantageous Effect of Invention

The present invention makes it possible to provide a multilayered article having excellent weather resistance and also having excellent interlayer adhesion, and a dustproof cover for a head-up display using the multilayered article.

Brief Description of Drawing

[Figure 1] Figure 1 is a schematic cross-sectional view showing an example of the multilayered article of the present invention.

Description of Embodiment

Hereinafter, the mode for carrying out the present invention (referred to as the "present embodiment" simply hereinafter) will be described in detail. The present embodiment below is an example for describing the present invention, and the present invention is not limited to the present embodiment only.
In the present specification, "to" is used to mean that the numeral values described before and after that are included as the lower limit and the upper limit.
In the present specification, various physical property values and characteristic values are those at 23°C unless otherwise noted.
In the present specification, a weight average molecular weight and a number average molecular weight are those in terms of polystyrene measured by GPC (gel permeation chromatography) unless otherwise noted.
In the present specification, "(meth)acrylate" represents both acrylate and methacrylate, or any of them.
The multilayered article in the present specification is intended to include an article in the form of a film or a sheet. The "film" and the "sheet" each refer to a formed article that has a small thickness as compared with the length and the width and is almost flat. The "film" and the "sheet" in the present specification may be each single-layered or multilayered.
When measurement methods, etc. described by the standards stated in the present specification vary depending on the year, they are based on the standards as of January 1, 2022, unless otherwise noted.
The drawing attached to the present specification is a schematic diagram, and the reduction scale, etc. may not be consistent with reality.
In the present specification, near infrared ray is a light having a wavelength of 700 nm to 2500 nm.
The multilayered article of the present embodiment is a multilayered article having a base material layer and an infrared absorbing layer, the infrared absorbing layer comprising an ultraviolet curable resin and tungsten oxide, the ultraviolet curable resin comprising a component derived from a polyfunctional (meth)acrylate having a weight average molecular weight of 1000 or more, and the proportion of the tungsten oxide in the infrared absorbing layer being 25 to 50% by mass.
By taking such constitution, a multilayered article having excellent weather resistance and also having excellent interlayer adhesion is obtained.

By setting the content of the tungsten oxide in the infrared absorbing layer to 25 to 50% by mass, weather resistance can be improved. However, if the content of the tungsten oxide is either too high or too low, curing becomes insufficient, leading to poor adhesion. The resin composition of the present embodiment was able to maintain high adhesion by using a polyfunctional (meth)acrylate having a weight average molecular weight of 1000 or more. It is presumed that this is because the large molecular weight allows relaxation of shrinkage stress between crosslinking points, thereby reducing curing shrinkage.

Hereinafter, the present invention will be described in detail.

<Infrared absorbing layer>

The infrared absorbing layer in the present embodiment comprises an ultraviolet curable resin and tungsten oxide, and the ultraviolet curable resin comprises a component derived from a polyfunctional (meth)acrylate having a weight average molecular weight of 1000 or more. Usually, the infrared absorbing layer is formed with a polyfunctional (meth)acrylate having a weight average molecular weight of 1000 or more in a cured state.

<<Ultraviolet curable resin>>

The type and other details of the ultraviolet curable resin used in the present embodiment are not particularly specified as long as it is a polyfunctional (meth)acrylate having a weight average molecular weight of 1000 or more, and known resins can be used.

Examples of the ultraviolet curable resins include a polyfunctional (meth)acryloyl group-containing polymer having a weight average molecular weight of 1000 or more and a polyfunctional urethane (meth)acrylate oligomer having a weight average molecular weight of 1000 or more, with a polyfunctional urethane (meth)acrylate oligomer having a weight average molecular weight of 1000 or more being preferable.

The polyfunctional (meth)acryloyl group-containing polymer having a weight average molecular weight of 1000 or more can be obtained by, for example, synthesizing an epoxy compound having a (meth)acrylate backbone through copolymerization of (meth)acrylic acid and (meth)acrylic acid glycidyl ether, and then adding acrylic acid, methacrylic acid, or the like thereto. An example of the synthesis is shown below.

[Chem.1]

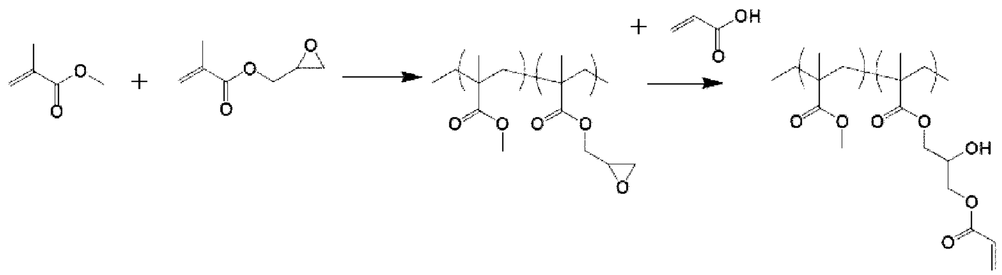

(2)

Examples of the epoxy (meth)acrylate used in the polyfunctional (meth)acryloyl group-containing polymer having a weight average molecular weight of 1000 or more include those having a repeating unit represented by the following formula (I).

[Chem.2]

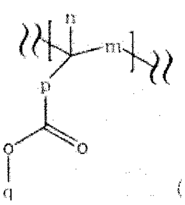

(I)

In the formula (I), m is an alkylene group having 1 to 4 carbon atoms or a single bond; n is an alkyl group having 1 to 4 carbon atoms or a hydrogen atom; p is a single bond or an alkylene group having 1 or 2 carbon atoms; and q is an alkyl group having 1 to 12 carbon atoms and optionally containing at least any substituent of an epoxy group, a hydroxy group,

an acryloyl group, and a methacryloyl group, or a hydrogen atom.

The polyfunctional epoxy (meth)acrylate polymer having a weight average molecular weight of 1000 or more more preferably contains the following repeating unit, that is, a repeating unit wherein, in the above formula (I), m is an alkylene group having 1 or 2 carbon atoms; n is an alkyl group having 1 or 2 carbon atoms; p is a single bond or a methylene group; and q is an alkyl group having 1 to 6 carbon atoms and optionally containing at least any substituent of a glycidyl group, a hydroxy group, and an acryloyl group, or a hydrogen atom.

For example, in the above formula (I), m is a methylene group; n is a methyl group; p is a single bond; and q is a methyl group, an alkyl group having 5 or less carbon atoms and containing a glycidyl group (an epoxy group), an alkyl group having 8 or less carbon atoms and containing a hydroxy group and an acryloyl group, or the like.

Specific examples of the repeating unit contained in the polyfunctional epoxy (meth)acrylate polymer having a weight average molecular weight of 1000 or more include those represented by the following formulae (II-a), (II-b), and (II-c).

[Chem.3]

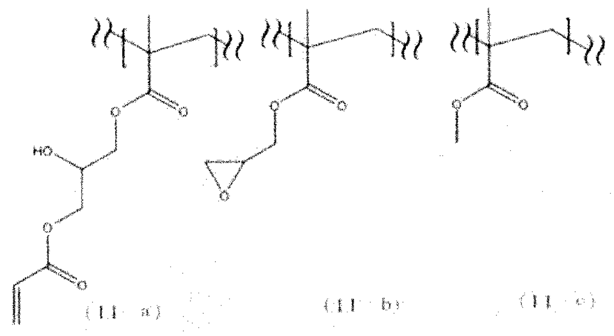

(II-a) (II-b) (II-c)

In the polyfunctional (meth)acrylate polymer having a weight average molecular weight of 1000 or more, the repeating unit represented by the formula (II-a) is preferably 30 to 85% by mol, more preferably 40 to 80% by mol, based on the total number of moles of the repeating unit represented by the formula (II-a), the repeating unit represented by the formula (II-b), and the repeating unit represented by the formula (II-c). The repeating unit represented by the formula (II-b) is preferably 5 to 30% by mol, more preferably 10 to 25% by mol, based on the total number of moles described above. Also, the repeating unit represented by the formula (II-c) is preferably 10 to 40% by mol, more preferably 10 to 35% by mol, based on the total number of moles described above.

In addition, the molar ratio among the repeating unit of the formula (II-a), the repeating unit of the formula (II-b), and the repeating unit of the formula (II-c) is preferably 4.5 to 5.5:1.5 to 2.5:2.5 to 3.5, for example, 5:2:3.

Such a polyfunctional (meth)acryloyl group-containing polymer having a weight average molecular weight of 1000 or more is commercially available and can be readily obtained. Examples thereof include SMP-220A (manufactured by Kyoeisha Chemical Co., Ltd.), SMP-250A (manufactured by Kyoeisha Chemical Co., Ltd.), SMP-360A (manufactured by Kyoeisha Chemical Co., Ltd.), SMP-550A (manufactured by Kyoeisha Chemical Co., Ltd.), HA7975 (manufactured by Showa Denko Materials Co., Ltd.), HA7975D (manufactured by Showa Denko Materials Co., Ltd.), RA-4101 (manufactured by Negami Chemical Industrial Co., Ltd.), 8KX-078 (manufactured by Taisei Fine Chemical Co., Ltd.), and 8KX-212 (manufactured by Taisei Fine Chemical Co., Ltd.).

Examples of the polyfunctional urethane (meth)acrylate oligomer having a weight average molecular weight of 1000 or more include: a urethanization reaction product of a (meth)acrylate monomer having at least one (meth) acryloyloxy group and hydroxy group in one molecule with a polyisocyanate; and a urethanization reaction product of an isocyanate compound obtained by reacting a polyol with a polyisocyanate with a (meth)acrylate monomer having at least one (meth)acryloyloxy group and hydroxy group in one molecule.

Examples of the (meth)acrylate monomer having at least one (meth)acryloyloxy group and hydroxy group in one molecule, which is used in the urethanization reaction, include 2-hydroxyethyl (meth)acrylate, 2-hydroxypropyl (meth) acrylate, 2-hydroxybutyl (meth)acrylate, 2-hydroxy-3-phenoxypropyl (meth)acrylate, glycerol di(meth)acrylate, trimethylolpropane di(meth)acrylate, pentaerythritol tri(meth)acrylate, and dipentaerythritol penta(meth)acrylate.

Examples of the polyisocyanate used in the urethanization reaction include hexamethylene diisocyanate, lysine diisocyanate, isophorone diisocyanate, dicyclohexylmethane diisocyanate, tolylene diisocyanate, and xylylene diisocyanate; a diisocyanate obtained by hydrogenating an aromatic isocyanate among these diisocyanates (for example, a diisocyanate such as hydrogenated tolylene diisocyanate and hydrogenated xylylene diisocyanate); a poly-, di- or tri-, isocyanate such as triphenylmethane triisocyanate and dimethylene triphenyl triisocyanate, or a polyisocyanate obtained by polymerizing a diisocyanate.

Examples of the polyol used in the urethanization reaction generally include aromatic, aliphatic, and alicyclic

polyols, as well as polyester polyols and polyether polyols. Usually, examples of the aliphatic and alicyclic polyols include 1,4-butanediol, 1,6-hexanediol, neopentyl glycol, ethylene glycol, propylene glycol, trimethylolethane, trimethylolpropane, dimethylolheptane, dimethylolpropionic acid, dimethylolbutanoic acid, glycerol, and hydrogenated bisphenol A.

Examples of the polyester polyols include those obtained by a dehydration condensation reaction between the polyol described above and a polycarboxylic acid. Specific examples of the polycarboxylic acid compound include succinic acid, adipic acid, maleic acid, trimellitic acid, hexahydrophthalic acid, phthalic acid, isophthalic acid, and terephthalic acid. These polycarboxylic acids may also be used in the form of their anhydrides. In addition, examples of the polyether polyols include a polyalkylene glycol, as well as a polyoxyalkylene-modified polyol obtained by reacting the polyol described above or a phenol with an alkylene oxide.

In addition, the polyfunctional polyester (meth)acrylate oligomer can be obtained by a dehydration condensation reaction using (meth)acrylic acid, a polycarboxylic acid, and a polyol. Examples of the polycarboxylic acid used in the dehydration condensation reaction include succinic acid, adipic acid, maleic acid, itaconic acid, trimellitic acid, pyromellitic acid, hexahydrophthalic acid, phthalic acid, isophthalic acid, and terephthalic acid. These polycarboxylic acids may also be used in the form of their anhydrides. In addition, examples of the polyol used in the dehydration condensation reaction include 1,4-butanediol, 1,6-hexanediol, diethylene glycol, triethylene glycol, propylene glycol, neopentyl glycol, dimethylolheptane, dimethylolpropionic acid, dimethylolbutanoic acid, trimethylolpropane, ditrimethylolpropane, pentaerythritol, and dipentaerythritol.

The polyfunctional epoxy (meth)acrylate oligomer having a weight average molecular weight of 1000 or more can be obtained by an addition reaction between a polyglycidyl ether and (meth)acrylic acid. Examples of the polyglycidyl ether include ethylene glycol diglycidyl ether, propylene glycol diglycidyl ether, tripropylene glycol diglycidyl ether, 1,6-hexanediol diglycidyl ether, and bisphenol A diglycidyl ether.

As the polyfunctional urethane (meth)acrylate, commercially available products may also be used. Examples thereof include UN-3320HA, UN-3320HC, UN-906S, UN-901T, UN-952, UN-904, UN-905, UN-3320HS, and H-575 (all manufactured by Negami Chemical Industrial Co., Ltd.), U-6LPA and UA-1100H (all manufactured by Shin-Nakamura Chemical Co., Ltd.), EBECRYL5129, EBECRYL4738, EBECRYL4740, EBECRYL4513, EBECRYL8254, EBECRYL220, and EBECRYL8701 (all manufactured by DAICEL-ALLNEX LTD.).

The double bond equivalent of the ultraviolet curable resin is 400 g/mol or less, preferably 360 g/mol or less, and more preferably 250 g/mol or less. By setting the double bond equivalent to the lower limit or more, the hardness of the resulting infrared absorbing layer tends to be improved. As the lower limit, 100 g/mol or more is preferable.

The weight average molecular weight of the ultraviolet curable resin is preferably 1,000 or more, more preferably 2,000 or more, and much more preferably 3,000 or more. By setting the weight average molecular weight to the lower limit or more, curing shrinkage can be suppressed more effectively. Also, the weight average molecular weight of the ultraviolet curable resin is preferably 100,000 or less, more preferably 50,000 or less, and much more preferably 30,000 or less. By setting the weight average molecular weight to the upper limit or less, coating can be performed more readily.

The weight average molecular weight of the ultraviolet curable resin in the present embodiment is the value measured according to the following method.

The value of the weight average molecular weight of the ultraviolet curable resin can be measured based on the description in paragraphs 0061 to 0064 of Japanese Patent Laid-Open No. 2007-179018. Details of the measurement method are shown below.

First, a calibration curve showing the relationship between elution time and the molecular weight of the ultraviolet curable resin is made using the universal calibration method with polystyrene as the standard polymer. Then, the elution curve (chromatogram) of the ultraviolet curable resin is measured under the same conditions as those used for the above calibration curve. Furthermore, the weight average molecular weight (Mw) is calculated from the elution time (molecular weight) of the ultraviolet curable resin and the peak area corresponding to that elution time (number of molecules). The weight average molecular weight is expressed by the following expression (A), where Ni means the number of molecules having a molecular weight of Mi.

$$Mw = \Sigma(NiMi^2)/\Sigma(NiMi) \; .... \; (A)$$

Apparatus: Aliance, manufactured by Waster
Column: Shodex K-805L (2 columns), manufactured by Showa Denko K.K.
Detector: UV detector, wavelength 254 nm
Eluent: chloroform

In addition to the above, the ultraviolet curable resin may contain a monofunctional alkyl (meth)acrylate monomer and/or a polyfunctional alkyl (meth)acrylate monomer. It may also contain a styrene monomer, a styrene oligomer, a cyclic acid anhydride, a N-substituted maleimide compound, a lactone ring compound, and the like.

The content of the component derived from a polyfunctional (meth)acrylate having a weight average molecular weight of 1000 or more contained in the infrared absorbing layer of the present embodiment is preferably 45% by mass or more, more preferably 50% by mass or more, and is preferably 75% by mass or less, more preferably 70% by mass or less, in the infrared absorbing layer (cured product). By setting the content to the lower limit or more, a multilayered article having higher toughness and higher hardness tends to be obtained. Also, by setting the content to the upper limit or less, a coating film with a good balance between transmittance and infrared absorption can be obtained.

The infrared absorbing layer of the present embodiment may comprise only one type of the ultraviolet curable resin and/or one type of the component derived from a polyfunctional (meth)acrylate having a weight average molecular weight of 1000 or more, or may comprise two or more types of each. When two or more types are contained, the total amount thereof preferably falls within the above range.

<<TUNGSTEN OXIDE>>

The infrared absorbing layer in the present embodiment comprises tungsten oxide.

The colorant used in the present embodiment comprises tungsten oxide. By comprising tungsten oxide, the multilayered article can cut near infrared rays, and can be more preferably used as a dustproof cover for a head-up display.

As the tungsten oxide, cesium tungsten oxide (CWO) is preferable.

The content of the tungsten oxide contained in the infrared absorbing layer of the present embodiment is 25% by mass or more, preferably 28% by mass or more, more preferably 30% by mass or more, much more preferably 35% by mass or more, and may be 40% by mass or more, and is 50% by mass or less, preferably 47% by mass or less, more preferably 45% by mass or less, and may be 44% by mass or less, in the infrared absorbing layer. By setting the content to the lower limit or more, the infrared absorption effect tends to be further improved. Also, by setting the content to the upper limit or less, excellent transparency can be maintained.

The infrared absorbing layer of the present embodiment may comprise only one type of tungsten oxide, or may comprise two or more types. When two or more types are contained, the total amount thereof preferably falls within the above range.

The infrared absorbing layer in the present embodiment may comprise or may not comprise colorants other than the tungsten oxide.

It is also preferable that the infrared absorbing layer in the present embodiment should not substantially comprise pigments (and further, colorants) other than the tungsten oxide. "Not substantially comprise" means that the content of pigments (and further, colorants) other than the tungsten oxide contained in the infrared absorbing layer is preferably less than 10% by mass, more preferably less than 5% by mass, and much more preferably less than 1% by mass, based on the content of the tungsten oxide.

<<Photopolymerization initiator>>

In the present embodiment, the infrared absorbing layer may comprise a photopolymerization initiator. For the photopolymerization initiator, any known photopolymerization initiator can be used as long as it cures the ultraviolet curable resin.

As the photopolymerization initiator, a photoradical generator that is cleaved by visible light having a wavelength shorter than a wavelength of 450 nm or ultraviolet light to generate radicals is preferable. Examples thereof include photopolymerization initiators having an acylphosphine oxide backbone, an $\alpha$-hydroxy ketone backbone, a benzyl dimethyl ketal backbone, an amino ketone backbone, a benzophenone backbone, and a trichloromethyl group-containing triazine backbone, and it is preferable to include a photopolymerization initiator having an acylphosphine oxide backbone and/or an $\alpha$-hydroxyketone backbone.

Specific examples of the photopolymerization initiator include benzophenone, thioxanthone, benzyl dimethyl ketal, $\alpha$-hydroxy ketone, $\alpha$-hydroxyalkylphenone, $\alpha$-amino ketone, $\alpha$-aminoalkylphenone, monoacylphosphine oxide, bisacylphosphine oxide, hydroxybenzophenone, aminobenzophenone, titanocene, oxime ester, and oxyphenylacetic acid ester.

In addition to the above, as the polymerization initiator, the description in paragraph 0039 of International Publication No. WO 2023/095664, the description in paragraphs 0234 to 0238 of International Publication No. WO 2022/102736, the description in paragraph 0135 of Japanese Patent Laid-Open No. 2010-106268, the description in paragraphs 0018 to 0025 of Japanese Patent Laid-Open No. 2009-13115, and the description in paragraphs 0018 to 0025 of Japanese Patent Laid-Open No. 2005-154312 can be considered, the contents of which are incorporated herein.

The content of the photopolymerization initiator contained in the infrared absorbing layer of the present embodiment is preferably 0.1% by mass or more, more preferably 1% by mass or more, and much more preferably 1.5% by mass or more, and is preferably 10% by mass or less, more preferably 7% by mass or less, and much more preferably 4% by mass or less, in the infrared absorbing layer. By setting the content to the lower limit or more, sufficient

curability can be exhibited. Also, by setting the content to the upper limit or less, storage stability and aging resistance tend to be further improved.

The infrared absorbing layer of the present embodiment may comprise only one type of photopolymerization initiator, or may comprise two or more types. When two or more types are contained, the total amount thereof preferably falls within the above range.

<<Other components>>

The infrared absorbing layer may comprise, in addition to the above components, a leveling agent, an ultraviolet absorbent, a light stabilizer, a heat stabilizer, a flame retardant, a flame retardant promoter, a colorant, an antistatic agent, a fluorescent brightener, an antifogging agent, a flow modifier, a plasticizer, a dispersant, an antibacterial agent, an anti-blocking agent, an impact modifier, a sliding modifier, a hue improver, an acid trapping agent, and the like. These components may be used singly, or may be used in combination of two or more.

The total amount of these other components is preferably 0% by mass or more and less than 10% by mass, more preferably 0% by mass or more and less than 5% by mass, and may be 0% by mass or more and less than 1% by mass, in the infrared absorbing layer.

<<Light stabilizer>>

As the light stabilizer, the following hindered amine light stabilizers can be used: bis(1,2,2,6,6-pentamethyl-4-piperidyl) sebacate, bis(2,2,6,6-tetramethylpiperidin-4-yl) sebacate, bis(1-undecanoxy-2,2,6,6-tetramethylpiperidin-4-yl) carbonate, 1,2,2,6,6-13pentamethyl-4-piperidyl methacrylate, 2,2,6,6-tetramethyl-4-piperidyl methacrylate, decanedioic acid bis[2,2,6,6-tetramethyl-1-(octyloxy)piperidin-4-yl], and 2-[[3,5-bis(1,1-dimethylethyl)-4-hydroxyphenyl]methyl]-2-butylpropanedioic acid bis[1,2,2,6,6-pentamethyl-4-piperidinyl].

The content ratio of the light stabilizer in the infrared absorbing layer is preferably 0 to 5% by mass, more preferably 0 to 3% by mass, and much more preferably 0 to 1% by mass. By setting the content to the upper limit or less, there is a tendency that the ultraviolet curable resin can be cured more effectively.

Examples of the flame retardants include halogen-based flame retardants and phosphorus-base flame retardants. Examples of the phosphorus-based flame retardants include an aromatic phosphoric ester compound, a phosphaphenanthrene compound, a phosphinic acid metal salt, ammonium polyphosphate, melamine polyphosphate, a phosphoric ester amide, and red phosphorus. Regarding the flame retardant, the description in paragraphs 0054 to 0082 of Japanese Patent Laid-Open No. 2022-104214, and the description in paragraphs 0052 to 0077 of Japanese Patent No. 7021724 can be considered, the contents of which are incorporated herein.

In the infrared absorbing layer, the total of the ultraviolet curable resin, the photopolymerization initiator, the colorant, and the light stabilizer preferably accounts for 90% by mass or more, more preferably 95% by mass or more, and much more preferably 97% by mass or more.

Also, in the infrared absorbing layer, the total of the ultraviolet curable resin, the photopolymerization initiator, the colorant, and the light stabilizer does not exceed 100% by mass.

The thickness of the infrared absorbing layer is preferably 0.5 μm or more, more preferably 1 μm or more, and much more preferably 1.5 μm or more, and is preferably 10 μm or less, more preferably 8 μm or less, and much more preferably 5 μm or less. By setting the thickness to the upper limit or less, curing defects during UV curing do not occur. Also, by setting the thickness to the lower limit or more, the infrared absorbing layer can exhibit its effect more effectively.

<Layer constitution of multilayered article>

Next, the layer constitution of the multilayered article of the present embodiment will be described.

The multilayered article of the present embodiment has a base material layer and an infrared absorbing layer. It is preferable that the base material layer should comprise an acrylic resin layer and a polycarbonate resin layer, and it is more preferable that the base material layer should comprise an acrylic resin layer and a polycarbonate resin layer, with the infrared absorbing layer positioned on a surface of the polycarbonate resin layer on a side opposite to the acrylic resin layer. By taking such constitution, a multilayered article having further excellent weather resistance is obtained.

Hereinafter, a preferred example of the multilayered article of the present embodiment will be described with reference to Figure 1. It goes without saying that the multilayered article of the present embodiment is not limited to that shown in Figure 1.

Figure 1 is a schematic cross-sectional view showing an example of the multilayered article of the present embodiment, in which numeral 1 designates a multilayered article, numeral 2 designates an acrylic resin layer, numeral 3 designates a polycarbonate resin layer, and numeral 4 designates an infrared absorbing layer. In the multilayered article 1 of the present embodiment, it is preferable that the infrared absorbing layer 4 should be positioned on a surface of the

polycarbonate resin layer 3 on a side opposite to the acrylic resin layer 2. By taking such constitution, the weather resistance of the multilayered article can be improved. In the present specification, the acrylic resin layer 2 and the polycarbonate resin layer 3 may be collectively referred to as a base material. It goes without saying that the base material may include other layers without departing from the subject matter of the present invention. The details of the other layers will be described later.

The infrared absorbing layer 4 may be an outermost layer of the multilayered article 1. By providing the infrared absorbing layer 4, the surface hardness of the multilayered article tends to be further improved. In the multilayered article 1 of the present embodiment, the acrylic resin layer 2, the polycarbonate resin layer 3, and the infrared absorbing layer 4 are laminated in this order, and it is preferable that the infrared absorbing layer 4 should be positioned on the surface of the polycarbonate resin layer 3. By being positioned on the surface of the polycarbonate resin layer 3, the formability of the infrared absorbing layer 2 (the coating property of a composition for forming the infrared absorbing layer) can be further improved. As long as the acrylic resin layer 2, the polycarbonate resin layer 3, and the infrared absorbing layer 4 are laminated in the above order, the multilayered article of the present embodiment may have other layers without departing from the subject matter of the present embodiment, but it is preferable that the multilayered article should not have other layers, that is, the above layers are next to each other.

The multilayered article of the present embodiment may also be a flame resistant base material in which the content of a sulfonic acid metal salt in at least one layer of the acrylic resin layer and the polycarbonate resin layer is 0.01 to 0.80% by mass. By using such a flame resistant base material, the multilayered article can be preferably used even for applications requiring flame resistance. The details of these will be described later.

The thickness (total thickness) of the multilayered article is not particularly limited, but is preferably 30 μm or more, more preferably 100 μm or more. The thickness of the multilayered article is preferably 10,000 μm or less, more preferably 5,000 μm or less, much more preferably 2,000 μm or less, or may be 1,000 μm or less, or 500 μm or less.

The multilayered article of the present embodiment is preferably excellent in an infrared shielding property.

Specifically, the light transmittance of the multilayered article of the present embodiment at a wavelength of 1000 μm is preferably 60% or less, more preferably 40% or less, much more preferably 25% or less, even more preferably 20% or less, and still more preferably 10% or less. The lower limit is not particularly specified, but it is practically more than 0%.

The multilayered article of the present embodiment is also preferably excellent in transparency.

Specifically, the haze of the multilayered article as measured in accordance with JIS K 7136 is much more preferably 3.0% or less, even more preferably 2.0% or less, still more preferably 1.5% or less, and still much more preferably 1.0% or less. The lower limit is preferably 0% or more, but it is practically more than 0%.

Also, specifically, the total light transmittance of the multilayered article of the present embodiment is preferably 60% or more, more preferably 65% or more, much more preferably 70% or more, and although 100% is ideal, a total light transmittance of 90% or less sufficiently satisfies the required performance.

The multilayered article of the present embodiment is also preferably excellent in weather resistance.

Specifically, the haze of the multilayered article as measured in accordance with JIS K 7136 after the weather resistance test is much more preferably 10.0% or less, even more preferably 8.0% or less, still more preferably 5.0% or less, and still much more preferably 4.5% or less. The lower limit is preferably 0% or more, but it is practically more than 0%.

The multilayered article of the present embodiment may also have flame resistance. Specifically, the multilayered article preferably satisfies the evaluation C (burning up to the standard line B, but the burning rate is 102 mm/min or less) in the FMVSS test, and more preferably satisfies the evaluation B (self-extinguishing within burning distance of 51 mm (and within 60 seconds) from the standard line A) in the FMVSS test.

The light transmittance at a wavelength of 1000 nm, the total light transmittance, the haze after the heat resistance test, and the FMVSS test are measured in accordance with the description in Examples described later.

The multilayered article of the present embodiment preferably further comprises a hard coat layer. It is preferable that the multilayered article should have a hard coat layer on at least one surface thereof, and it is more preferable that the multilayered article should have a hard coat layer on the acrylic resin layer of the multilayered article on a side opposite to the polycarbonate resin layer. The hard coat layer may be an outermost layer of the multilayered article. By providing a hard coat layer, the surface hardness of the multilayered article tends to be further improved. In the multilayered article of the present embodiment, the infrared absorbing layer, the polycarbonate resin layer, the acrylic resin layer, and the hard coat layer are preferably laminated in this order. In the multilayered article of the present embodiment, the hard coat layer is preferably provided on the surface of the acrylic resin layer. By providing the hard coat layer on the surface of the acrylic resin layer, the coating property of the hard coat layer can be further improved.

The hard coat layer that may be included in the multilayered article of the present embodiment is a layer having a higher surface hardness than the polycarbonate resin layer. By including such a hard coat layer, the multilayered article or a formed article can be enhanced in surface hardness.

The thickness of the hard coat layer is preferably 0.5 μm or more, more preferably 1 μm or more, much more preferably 2 μm or more, even more preferably 2.5 μm or more, still more preferably 3 μm or more. By setting the thickness to the above lower limit or more, the pencil hardness of the whole multilayered article due to the hard coat layer tends to be

further improved. The upper limit of the thickness of the hard coat layer is preferably 20 μm or less, more preferably 15 μm or less, much more preferably 12 μm or less, even more preferably 10 μm or less, still more preferably 8 μm or less, or may be 5 μm or less. By setting the thickness to the upper limit or less, the flame resistance tends to be further improved.

The hard coat layer is preferably one obtained by applying a hard coat material capable of being thermoset or cured by active energy rays and then curing the material.

An example of a paint to be cured by using active energy rays is a resin composition composed of one or more monofunctional or polyfunctional (preferably bi- to decafunctional) (meth)acrylates or oligomers, and is preferably a resin composition containing a monofunctional or polyfunctional (preferably bi- to decafunctional) urethane (meth)acrylate oligomer, or the like. To these resin compositions, a photopolymerization initiator is preferably added as a curing catalyst.

Examples of the thermosetting resin paints include polyorganosiloxane-based ones and crosslinked acrylic ones. Some of such resin compositions are commercially available as acrylic resins or hard coat agents for polycarbonate resin films or sheets, and they may be appropriately selected considering suitability with the coating line.

Regarding the hard coat layer, the description in paragraphs 0045 to 0055 of Japanese Patent Laid-Open No. 2013-020130, the description in paragraphs 0073 to 0076 of Japanese Patent Laid-Open No. 2018-103518, and the description in paragraphs 0062 to 0082 of Japanese Patent Laid-Open No. 2017-213771 can be considered, the contents of which are incorporated herein.

The hard coat layer preferably contains, in addition to the above components, inorganic particles, an organic pigment, an ultraviolet absorbent, a light stabilizer, a heat stabilizer, a flame retardant, a flame retardant promoter, a colorant, an antistatic agent, a fluorescent brightener, an antifogging agent, a flow modifier, a plasticizer, a dispersant, an antibacterial agent, an anti-blocking agent, an impact modifier, a sliding modifier, a hue improver, an acid trapping agent, and the like, and more preferably contains inorganic particles. These components may be used singly, or may be used in combination of two or more.

Preferred examples of the inorganic particles include nanoparticles composed of a metal or a metal compound. Examples thereof include gold, silver, copper, platinum, palladium, nickel, cobalt, iron, manganese, silicon, titanium, zirconium, tungsten, molybdenum, chromium, zinc, aluminum, and composite metals composed of two or more of these. Preferred examples of the metal compounds include metal oxides, such as iron oxide, silicon oxide, zirconium oxide, vanadium oxide, niobium oxide, tantalum oxide, chromium oxide, molybdenum oxide, tungsten oxide, cobalt oxide, nickel oxide, cerium oxide, cupric oxide, zinc oxide, tin oxide, antimony oxide, titanium dioxide, aluminum oxide, indium tin oxide (ITO), cesium tungsten oxide (CWO), and mixtures thereof, metal carbides, metal borides, metal carbonates, zeolite, clay, and composite materials of these, and more preferred examples thereof include silicon oxide.

The inorganic particles may be surface-treated or may not be surface-treated. Preferably, the inorganic particles are surface-treated. The surface treatment agent is preferably a silane coupling agent.

The average particle diameter (D50) of the inorganic particles is preferably 5 nm or more, more preferably 7 nm or more, and is preferably 30 nm or less, more preferably 20 nm or less. By setting the average particle diameter to the lower limit or more, flame resistance tends to be further improved. Also, by setting the average particle diameter to the upper limit or less, transparency tends to be further improved.

The content of the inorganic particles in the hard coat layer of the present embodiment is preferably 20 parts by mass or more, more preferably 30 parts by mass or more, and is preferably 50 parts by mass or less, more preferably 40 parts by mass or less, and much more preferably 35 parts by mass or less, based on 100 parts by mass of the hard coat layer. By setting the content to the lower limit or more, flame resistance tends to be further improved. Also, by setting the content to the upper limit or less, the crack suppression effect during the heat resistance test tends to be further improved.

The hard coat layer may contain only one type of inorganic particles, or may contain two or more types. When two or more types are contained, the total amount thereof preferably falls within the above range.

Examples of the flame retardants include halogen-based flame retardants and phosphorus-based flame retardants. Examples of the phosphorus-based flame retardants include an aromatic phosphoric ester compound, a phosphaphenanthrene compound, a phosphinic acid metal salt, ammonium polyphosphate, melamine polyphosphate, a phosphoric ester amide, and red phosphorus. Regarding the flame retardant, the description in paragraphs 0054 to 0082 of Japanese Patent Laid-Open No. 2022-104214, and the description in paragraphs 0052 to 0077 of Japanese Patent No. 7021724 can be considered, the contents of which are incorporated herein.

The multilayered article of the present embodiment may have, in addition to the above, other layers. Specific examples thereof include an adhesion bonding layer, an adhesive layer, an anti-fouling layer, an antireflective layer, and a polarization layer, with an antireflective layer being preferable.

It is usually preferable that the antireflective layer should be provided on a side of the infrared absorbing layer opposite to the polycarbonate resin layer on the lower side of numeral 4 (in Figure 1, for example).

Regarding the details of the antireflective layer, the description in paragraphs 0062 to 0083 of Japanese Patent Laid-Open No. 2023-114940, the description in paragraphs 0013 to 0041 of Japanese Patent Laid-Open No. 2022-174051, and the description in paragraphs 0043 to 0046 of Japanese Patent Laid-Open No. 2021-081596 can be considered, the contents of which are incorporated herein.

It is usually preferable that the polarization layer should be provided on a side of the infrared absorbing layer opposite to the polycarbonate resin layer on the lower side of numeral 4 (in Figure 1, for example).

Regarding the details of the polarization layer, the description in paragraphs 0022 to 0029 of Japanese Patent Laid-Open No. 2008-105225, the description in paragraphs 0011 to 0021 of Japanese Patent Laid-Open No. 2020-52406, and the description in paragraphs 0014 to 0037 of Japanese Patent Laid-Open No. 2023-13533 can be considered, the contents of which are incorporated herein.

On at least one surface of the multilayered article, one or more of anti-fingerprint treatment, anti-glare treatment, weather resistant treatment, antistatic treatment, anti-fouling treatment, and anti-blocking treatment may have been carried out. The anti-blocking treatment refers to treatment by which even films that have been brought into close contact with each other can be easily peeled off from each other, and examples of such treatment include addition of an anti-blocking agent and provision of asperities on the surface of the multilayered article.

<<Polycarbonate resin layer>>

The polycarbonate resin layer in the present embodiment comprises a polycarbonate resin.

The polycarbonate resin is not particularly limited as long as it contains, in a molecular main chain, a -[O-R-OCO]- constitutional unit (R is a hydrocarbon group (for example, that containing an aliphatic group, an aromatic group, or both an aliphatic group and an aromatic group, or that further having a straight-chain structure or a branched structure)) containing a carbonate ester bond, and various polycarbonate resins can be used, with aromatic polycarbonate resins being preferable.

In the present embodiment, the polycarbonate resin preferably contains a bisphenol polycarbonate resin. The bisphenol polycarbonate resin refers to a resin in which 80% by mol or more, preferably 90% by mol or more, more preferably 95% by mol or more, of the constitutional units to constitute the polycarbonate resin are carbonate constitutional units derived from bisphenol and/or derivatives thereof. The bisphenol and/or derivatives thereof are preferably bisphenol A, bisphenol AP, bisphenol C, bisphenol BP, or derivatives thereof, more preferably bisphenol A, bisphenol AP, or derivatives thereof, and much more preferably bisphenol A or derivatives thereof.

The bisphenol polycarbonate resin is preferably a bisphenol A polycarbonate resin.

The molecular weight of the polycarbonate resin is not particularly specified, but a viscosity average molecular weight converted from a solution viscosity usually measured at a temperature of 25°C using methylene chloride as a solvent is preferably 20,000 or more, more preferably 22,000 or more. The viscosity average molecular weight is preferably 35,000 or less, more preferably 32,000 or less, much more preferably 30,000 or less. By setting the viscosity average molecular weight to the lower limit or more, the strength of the resulting plate-shaped molded article can be increased. By setting the viscosity average molecular weight to the upper limit or less, the formability tends to be improved.

In this regard, the viscosity average molecular weight [Mv] means a value obtained by determining an intrinsic viscosity [η] (unit: dL/g) at a temperature of 25°C using methylene chloride as a solvent and using an Ubbelohde viscometer and then making calculation from the Schnell's viscosity equation, that is, $\eta = 1.23 \times 10^{4} Mv^{0.83}$. Moreover, the intrinsic viscosity [η] is a value obtained by measuring a specific viscosity [$\eta_{sp}$] at each solution concentration [C] (g/dL) and then making calculation from the following equation.

[Num.1]

$$\eta = \lim_{c \to 0} \eta_{sp} / \mathrm{c}$$

In the present embodiment, two or more polycarbonate resins different in viscosity average molecular weight may be mixed and used, and in this case, the viscosity average molecular weight is a viscosity average molecular weight of the mixture.

The glass transition onset temperature (Tg) of the polycarbonate resin for use in the present embodiment is preferably 160°C or lower, more preferably 155°C or lower, much more preferably 154°C or lower, even more preferably 153°C or lower, still more preferably 152°C or lower, still much more preferably 151°C or lower. The glass transition onset temperature (Tg) of the polycarbonate resin for use in the present embodiment is, for example, 140°C or higher, or may be 143°C or higher, 145°C or higher, 147°C or higher, 148°C or higher.

The glass transition temperature is measured in accordance with the description in paragraph 0056 of Japanese Patent Laid-Open No. 2022-080270.

In addition, regarding details of the polycarbonate resin, the description in paragraphs 0011 to 0020 of Japanese Patent Laid-Open No. 2012-144604 and the description in paragraphs 0014 to 0035 of Japanese Patent Laid-Open No. 2019-002023 can be considered without departing from the subject matter of the present embodiment, the contents of

which are incorporated herein.

The content of the polycarbonate resin in the polycarbonate resin layer in the present embodiment is preferably 90% by mass or more, more preferably 92% by mass or more, much more preferably 94% by mass or more, even more preferably 96% by mass or more, still more preferably 97% by mass or more, or may be 98% by mass or more, in 100% by mass of the polycarbonate resin layer. The upper limit may be 100% by mass.

When the polycarbonate resin layer in the present embodiment contains two or more polycarbonate resins, the total amount thereof preferably falls within the above range.

The polycarbonate resin layer in the present embodiment may comprise a sulfonic acid metal salt. The sulfonic acid metal salt is a component generally used as a flame retardant for a polycarbonate resin.

The sulfonic acid metal salt is preferably an alkali metal salt. An alkali metal to constitute the alkali metal salt is preferably lithium, sodium, potassium, or rubidium, more preferably sodium or potassium. The sulfonic acid metal salt may contain a fluorine atom.

The molecular weight of the sulfonic acid metal salt for use in the present embodiment is preferably 100 to 900, more preferably 100 to 500.

Specific examples of the sulfonic acid metal salts for use in the present embodiment are shown below. It goes without saying that in the present embodiment, the sulfonic acid metal salt is not limited to these.

[Chem.4]

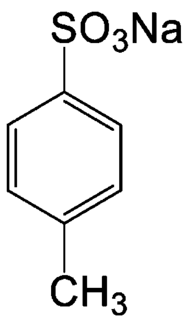

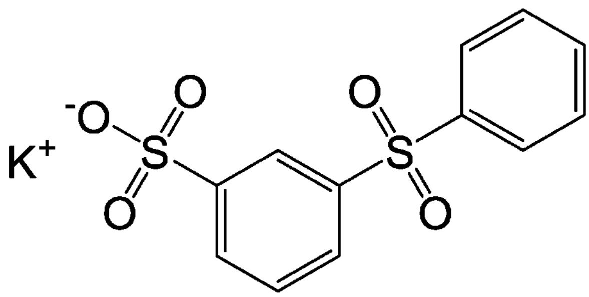

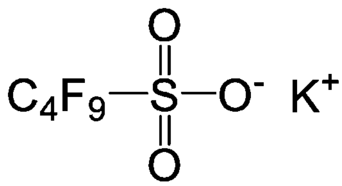

The content of the sulfonic acid metal salt in the polycarbonate resin layer is preferably 0.01 to 0.80% by mass, more preferably 0.7% by mass or less, much more preferably 0.6% by mass or less, even more preferably 0.5% by mass or less, still more preferably 0.4% by mass or less, and depending on the intended use and the like, it may be less than 0.1% by mass, or 0.05% by mass or less.

The polycarbonate resin layer in the present embodiment may contain only one of the sulfonic acid metal salts, or may contain two or more thereof. When the polycarbonate resin layer contains two or more, the total amount thereof preferably falls within the above range.

The polycarbonate resin layer in the present embodiment may comprise a flame retardant other than the sulfonic acid metal salt, for example, a phosphorus-based flame retardant such as a condensed phosphate ester or a phosphazene, a silicone-based flame retardant such as a polyorganosiloxane, or a halogen-based flame retardant such as a brominated polycarbonate oligomer. Specific examples of the phosphorus-based flame retardant include condensed phosphate esters such as resorcinol bis-diphenyl phosphate (RDP), resorcinol bis-dixylenyl phosphate (RDX), bisphenol A bis-diphenyl phosphate (BDP), and biphenyl bis-diphenyl phosphate, as well as straight-chain phenoxyphosphazenes or cyclic phenoxyphosphazenes. The content of the flame retardant is preferably 0.3 to 20% by mass, and preferably 0.5 to 10% by mass, in the polycarbonate resin layer.

The polycarbonate resin layer in the present embodiment may comprise an ultraviolet absorbent, such as a triazine-based ultraviolet absorbent or a benzotriazole-based ultraviolet absorbent. The content of the ultraviolet absorbent is preferably 0.1 to 5.0% by mass, and more preferably 0.5 to 2.0% by mass, in the polycarbonate resin layer.

The polycarbonate resin layer in the present embodiment may contain, in addition to the above components, an antioxidant, a mold release agent, a flame retardant promoter, a heat stabilizer, a colorant, an antistatic agent, a fluorescent brightener, an antifogging agent, a flow modifier, a plasticizer, a dispersant, an antibacterial agent, an anti-blocking agent, an impact modifier, a sliding modifier, a hue improver, an acid trapping agent, and the like. These components may be used singly, or may be used in combination of two or more. The total content of the above components is preferably 0 to 5% by mass, more preferably 0 to 3% by mass, much more preferably 0 to 1% by mass, even more preferably 0 to 0.5% by mass, still more preferably 0 to 0.3% by mass, still much more preferably 0 to 0.1% by mass, of the polycarbonate resin layer.

Examples of the antioxidants include a phenol-based antioxidant, an amine-based antioxidant, a phosphorus-based antioxidant, and a thioether-based antioxidant. Among these, a phosphorus-based antioxidant and a phenol-based

antioxidant (more preferably a hindered phenol-based antioxidant) are preferable, and a phosphorus-based antioxidant is more preferable, in the present embodiment.

The phosphorus-based antioxidant is preferably a phosphite-based antioxidant, and a phosphite compound represented by the following formula (1) or (2) is preferable.

[Chem.5]

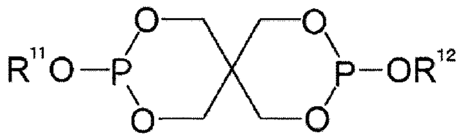

(1)

(wherein $R^{11}$ and $R^{12}$ are each independently an alkyl group having 1 to 30 carbons or an aryl group having 6 to 30 carbons.)

[Chem.6]

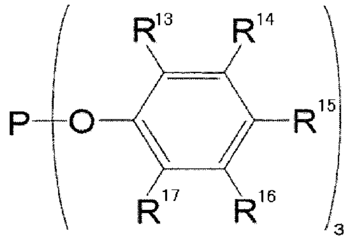

(2)

(wherein $R^{13}$ to $R^{17}$ are each independently a hydrogen atom, an aryl group having 6 to 20 carbons, or an alkyl group having 1 to 20 carbons.)

In the formula (1), the alkyl groups represented by $R^{11}$ and $R^{12}$ are each independently preferably a straight-chain or branched alkyl group having 1 to 10 carbons. When $R^{11}$ and $R^{12}$ are aryl groups, they are each preferably an aryl group represented by any of the following formulae (1-a), (1-b), and (1-c). In the formulae, * represents a linkage position.

[Chem.7]

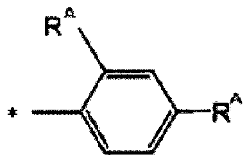

(1－a)

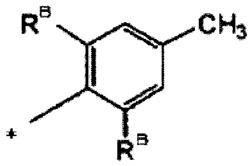

(1－b)

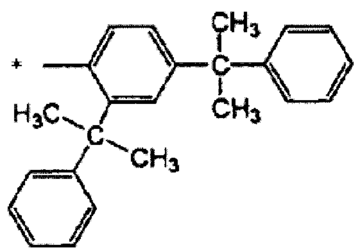

(1－c)

(In the formula (1-a), $R^A$s each independently represent an alkyl group having 1 to 10 carbons. In the formula (1-b), $R^B$s each independently represent an alkyl group having 1 to 10 carbons.)

Regarding the hindered phenol-based antioxidant, the description in paragraph 0063 of Japanese Patent Laid-Open No. 2018-090677 and the description in paragraph 0076 of Japanese Patent Laid-Open No. 2018-188496 can be referred to, the contents of which are incorporated herein.
Regarding the antioxidant, in addition to the above, the description in paragraphs 0057 to 0061 of Japanese Patent Laid-Open No. 2017-031313 can be considered, the contents of which are incorporated herein.
The content of the antioxidant is preferably 0.001 part by mass or more, more preferably 0.005 part by mass or more, much more preferably 0.010 part by mass or more, even more preferably 0.050 part by mass or more, based on 100 parts by mass of the polycarbonate resin layer. The upper limit of the content of the antioxidant is preferably 0.500 part by mass or less, more preferably 0.300 part by mass or less, much more preferably 0.200 part by mass or less, even more preferably 0.150 part by mass or less, still more preferably 0.100 part by mass or less, particularly preferably 0.080 part by mass or less, based on 100 parts by mass of the polycarbonate resin layer.
The antioxidants may be used singly, or may be used in combination of two or more. When two or more are used, the total amount thereof preferably falls within the above range.
Next, the mold release agent that can be contained in the polycarbonate resin layer will be described.
The type of the mold release agent is not particularly specified, but examples thereof include an aliphatic carboxylic acid, an ester of an aliphatic carboxylic acid and an alcohol, an aliphatic hydrocarbon compound having a number average molecular weight of 200 to 15,000, a polyether having a number average molecular weight of 100 to 5,000, and a polysiloxane-based silicone oil.
Regarding the details of the mold release agent, the description in paragraphs 0035 to 0039 of International Publication No. 2015/190162 can be considered, the contents of which are incorporated herein.
The content of the mold release agent is preferably 0.001 part by mass or more, more preferably 0.005 part by mass or more, much more preferably 0.010 part by mass or more, even more preferably 0.050 part by mass or more, based on 100 parts by mass of the polycarbonate resin layer. The upper limit is preferably 0.5 part by mass or less, more preferably 0.3 part by mass or less, much more preferably 0.1 part by mass or less.
The mold release agents may be used singly, or may be used in combination of two or more. When two or more are used, the total amount thereof preferably falls within the above range.
The thickness of the polycarbonate resin layer is preferably 50 μm or more, more preferably 100 μm or more, much more preferably 150 μm or more. By setting the thickness to the above lower limit or more, forming becomes easier, and the flame resistance tends to be improved. The upper limit of the thickness of the polycarbonate resin layer is preferably 1000 μm or less, more preferably 750 μm or less, much more preferably 500 μm or less.

<<Acrylic resin layer>>

The acrylic resin layer in the present embodiment contains an acrylic resin.
The acrylic resin layer may be single-layered, or may be multilayered, but is preferably single-layered.
The acrylic resin layer in the present embodiment contains an acrylic resin, as described above.
An example of the acrylic resin is preferably a polymer containing alkyl (meth)acrylate units (preferably alkyl methacrylate units) in amounts of 50% by mass or more (preferably 90% by mass or more) of all constitutional units, and is more preferably a polymer containing methyl (meth)acrylate units (preferably methyl methacrylate units) in amounts of 50% by mass or more (preferably 90% by mass or more) of all constitutional units. Examples of constitutional units other than the alkyl (meth)acrylate units include other (meth)acrylate units, styrene units, cyclic acid anhydride units, N-substituted maleimide units, and lactone ring units.
The acrylic resin layer may be composed of an acrylic resin only, or may contain another thermoplastic resin in addition to the acrylic resin.
The other acrylic resin layer more preferably contains, as another thermoplastic resin, at least one thermoplastic resin selected from a styrene resin, a fluorine resin such as polyvinylidene fluoride, and an aromatic polyether resin such as polyphenylene ether, and much more preferably contains a styrene resin.
An example of the acrylic resin layer is a layer 90% by mass or more (preferably 95% by mass or more, more preferably 97% by mass or more, much more preferably 98% by mass or more) of which is composed of the acrylic resin.
Another example of the acrylic resin is a layer 90% by mass or more (preferably 95% by mass or more, more preferably 97% by mass or more, much more preferably 98% by mass or more) of which is composed of the acrylic resin and another thermoplastic resin (preferably styrene resin).
The weight average molecular weight of the acrylic resin is not particularly specified, but is preferably 10,000 or more, more preferably 30,000 or more, much more preferably 50,000 or more, even more preferably 60,000 or more, still more preferably 70,000 or more. The weight average molecular weight of the acrylic resin is preferably 250,000 or less, more preferably 200,000 or less, much more preferably 150,000 or less, even more preferably 100,000 or less, still more preferably 90,000 or less.
The glass transition temperature of the acrylic resin layer for use in the present embodiment is preferably 80°C or

higher, more preferably 90°C or higher, much more preferably 95°C or higher, even more preferably 100°C or higher, still more preferably 105°C or higher. The upper limit is not particularly specified, but for example, it is practically 200°C or lower.

The glass transition temperature is measured in accordance with the description in paragraph 0056 of Japanese Patent Laid-Open No. 2022-080270.

The acrylic resin layer may comprise, in addition to the above components, inorganic particles, an antioxidant, a mold release agent, an ultraviolet absorbent, a heat stabilizer, a flame retardant, a flame retardant promoter, a colorant, an antistatic agent, a fluorescent brightener, an antifogging agent, a flow modifier, a plasticizer, a dispersant, an antibacterial agent, an anti-blocking agent, an impact modifier, a sliding modifier, a hue improver, an acid trapping agent, and the like. These components may be used singly, or may be used in combination of two or more. The total content of the above components is preferably 0 to 5% by mass, more preferably 0 to 3% by mass, much more preferably 0 to 1% by mass, even more preferably 0 to 0.5% by mass, still more preferably 0 to 0.3% by mass, and still much more preferably 0 to 0.1 % by mass, of the acrylic resin layer.

<<Ultraviolet absorbent>>

As described above, the acrylic resin layer in the present embodiment may comprise an ultraviolet absorbent, in order to prevent ultraviolet degradation of the polycarbonate resin layer, the acrylic resin layer, and the infrared absorbing layer in the present embodiment.

Examples of the ultraviolet absorbent that can be used include benzotriazole-based, benzophenone-based, phenyl salicylate ester-based, benzoxazin-based, malonate ester-based, triazine-based, and polymer-type ultraviolet absorbents having them added as pendants.

Examples of the benzotriazole-based ultraviolet absorbent may include 2-(5-methyl-2-hydroxyphenyl)benzotriazole, 2-[2-hydroxy-3,5-bis(α,α-dimethylbenzyl)phenyl]-2H-benzotriazole, 2-(2'-hydroxy-5'-t-octylphenyl)benzotriazole, 2,2-methylenebis[4-(1,1,3,3-tetramethylenebutyl)-6-(2H-benzotriazol-2-yl)phenol], and 2-(2H-benzotriazol-2-yl)-6-(1-methyl-1-phenylethyl)-4-(1,1,3,3-tetramethylbutyl)phenol, and examples of the benzophenone-based ultraviolet absorbent may include 2-hydroxy-4-octoxybenzophenone, 2,4-dihydroxybenzophenone, 2-hydroxy-4-methoxy-4'-chlorobenzophenone, 2,2-dihydroxy-4-methoxybenzophenone, and 2,2-dihydroxy-4,4'-dimethoxybenzophenone.

In addition, examples of the phenyl salicylate ester-based ultraviolet absorbent may include p-t-butylphenyl salicylate ester. Examples of the benzoxazin-based ultraviolet absorbent may include 2,2'-(1,4-phenylene)bis[4H-3,1-benzoxazin-4-one].

Examples of the malonate ester-based ultraviolet absorbent may include dimethyl [(4-methoxyphenyl)-methylene]malonate.

Examples of the triazine-based ultraviolet absorbent may include, but are not limited to, 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2,6-di(4-biphenyl)-4-(2-hydroxy-4-(2-ethylhexyl)oxyphenyl)-1,3,5triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, 2,4-diphenyl-6-(2-hydroxy-4-benzyloxyphenyl)-1,3,5-triazine, and 2,4-diphenyl-6-(2-hydroxy-4-butoxyethoxy)-1,3,5-triazine, and generally commercially available ultraviolet absorbents are also included.

Examples of the polymer-type ultraviolet absorbent may include those having a hydroxybenzophenone or hydroxybenzotriazole structure in the molecule, and in some of them, hydrogen atoms are substituted with alkyl groups. An example of the polymer-type ultraviolet absorbent is UVA-633L (2-hydroxy-4-(methacryloyloxyethoxy)benzophenone) methyl methacrylate copolymer commercially available from BASF SE.

As described above, the acrylic resin layer in the present embodiment may comprise an antioxidant. Examples of the antioxidant include a phenol-based antioxidant, an amine-based antioxidant, a phosphorus-based antioxidant, and a thioether-based antioxidant. Among these, a phosphorus-based antioxidant is preferable in the present embodiment.

The phosphorus-based antioxidant is preferably a phosphite-based antioxidant, and a phosphite compound represented by the following formula (1) or (2) is more preferable.

[Chem.8]

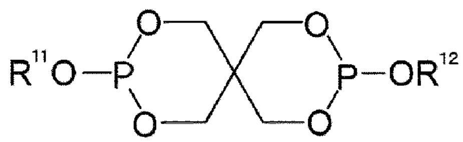

(1)

(In the formula (1), $R^{11}$ and $R^{12}$ each independently represent an alkyl group having 1 to 30 carbon atoms or an aryl group having 6 to 30 carbon atoms.)

[Chem.9]

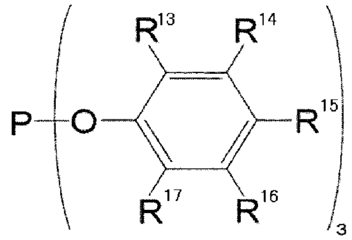

(2)

(In the formula (2), $R^{13}$ to $R^{17}$ each independently represent a hydrogen atom, an aryl group having 6 to 20 carbon atoms, or an alkyl group having 1 to 20 carbon atoms.)

In the formula (1), the alkyl groups represented by $R^{11}$ and $R^{12}$ are each independently preferably a straight-chain or branched alkyl group having 1 to 10 carbon atoms. When $R^{11}$ and $R^{12}$ are aryl groups, they are each preferably an aryl group represented by any of the following formulae (1-a), (1-b) and (1-c). In the formulae, * represents a linkage position.

[Chem.10]

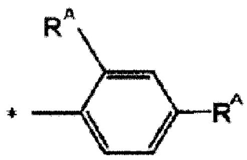

(1-a)

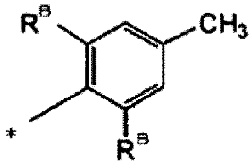

(1-b)

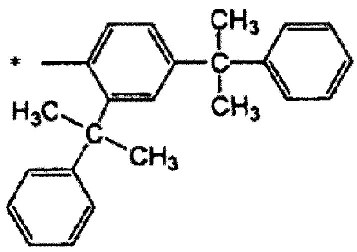

(1-c)

The content of the antioxidant is preferably 0.001 part by mass or more, more preferably 0.005 part by mass or more, and much more preferably 0.010 part by mass or more, based on 100 parts by mass of the acrylic resin layer. Also, the upper limit of the content of the antioxidant is preferably 0.500 part by mass or less, more preferably 0.300 part by mass or less, much more preferably 0.200 part by mass or less, even more preferably 0.150 part by mass or less, still more preferably 0.100 part by mass or less, and still much more preferably 0.080 part by mass or less, based on 100 parts by mass of the acrylic resin layer.

The antioxidants may be used singly, or may be used in combination of two or more. When two or more are used, the total amount thereof preferably falls within the above range.

<<Mold release agent>>

As described above, the acrylic resin layer in the present embodiment may comprise a mold release agent. The type of the mold release agent is not particularly specified, but examples thereof include an aliphatic carboxylic acid, an

ester of an aliphatic carboxylic acid and an alcohol, an aliphatic hydrocarbon compound having a number average molecular weight of 200 to 15,000, a polyether having a number average molecular weight of 100 to 5,000, and a polysiloxane-based silicone oil.

Regarding the details of the mold release agent, the description in paragraphs 0035 to 0039 of International Publication No. WO 2015/190162 can be considered, the contents of which are incorporated herein.

The content of the mold release agent is preferably 0.001 part by mass or more, more preferably 0.005 part by mass or more, much more preferably 0.010 part by mass or more, and even more preferably 0.050 part by mass or more, based on 100 parts by mass of the acrylic resin layer. The upper limit is preferably 0.5 part by mass or less, more preferably 0.3 part by mass or less, and much more preferably 0.2 part by mass or less.

The mold release agents may be used singly, or may be used in combination of two or more. When two or more are used, the total amount thereof preferably falls within the above range.

As described above, the acrylic resin layer in the present embodiment may comprise inorganic particles. Examples of the inorganic particles include silica particles, alumina particles, zirconia particles, silicon particles, silver particles, and glass particles.

As described above, the acrylic resin layer in the present embodiment may contain a flame retardant. Examples of the flame retardant that may be contained in the acrylic resin layer include a phosphorus-based flame retardant and a sulfonic acid metal salt, with a phosphorus-based flame retardant being preferable.

Examples of the phosphorus-based flame retardant include an aromatic phosphoric ester compound, a phosphazene compound, a phosphaphenanthrene compound, a phosphinic acid metal salt, ammonium polyphosphate, melamine polyphosphate, a phosphoric ester amide, and red phosphorus, with an aromatic phosphoric ester compound, a phosphazene compound, and a phosphaphenanthrene compound being preferable.

Examples of the aromatic phosphoric ester compounds include resorcinol diphenyl phosphate, hydroquinone diphenyl phosphate, bisphenol A diphenyl phosphate, and biphenyl diphenyl phosphate. Examples of commercially available products thereof include PX-202, CR-741, PX-200 and PX-201 manufactured by Daihachi Chemical Industry Co., Ltd., and FP-500, FP-600, FP-700 and PFR manufactured by ADEKA CORPORATION.

Examples of the aromatic phosphoric ester compound include a cyclic phenoxyphosphazene and derivatives thereof. Examples of commercially available products thereof include Rabitle FP-110 manufactured by FUSHIMI Pharmaceutical Co., Ltd.

The phosphaphenanthrene compound is a phosphorus-based flame retardant having at least one phosphaphenanthrene backbone in a molecule, and examples of commercially available products thereof include HCA, HCA-HQ, BCA, SANKO-220 and M-Ester manufactured by Sanko Co., Ltd.

The phosphinic acid metal salts are phosphinates and/or diphosphinates and/or polymers thereof. Examples of the salts include salts of calcium, aluminum, and zinc. Examples of commercially available products of the phosphinic acid metal salts include "Exolit" (R) OP1230 and OP1240 manufactured by Clariant Japan K.K.

The phosphoric ester amide is an aromatic amide-based flame retardant containing a phosphorus atom and a nitrogen atom. Examples of commercially available products of the phosphoric ester amide include SP-703 manufactured by SHIKOKU CHEMICALS CORPORATION.

Examples of the ammonium polyphosphates include ammonium polyphosphate, melamine-modified ammonium polyphosphate, and ammonium carbamoyl polyphosphate. Examples of the aforementioned melamine polyphosphates include melamine phosphate, melamine pyrophosphate, and melamine polyphosphates such as phosphates with melamine, melam and melem. Preferably used are MPP-A manufactured by Sanwa Chemical Co., Ltd., and PMP-100 and PMP-200 manufactured by Nissan Chemical Corporation.

When the acrylic resin layer contains a flame retardant (phosphorus-based flame retardant, sulfonic acid metal salt, and other flame retardants), the content thereof is preferably 1 part by mass or more, more preferably 2 parts by mass or more, much more preferably 5 parts by mass or more, even more preferably 7 parts by mass or more, based on 100 parts by mass of the acrylic resin layer. The upper limit of the content of the flame retardant is preferably 25 parts by mass or less, more preferably 20 parts by mass or less, much more preferably 15 parts by mass or less, based on 100 parts by mass of the acrylic resin layer.

The acrylic resin layer may contain only one flame retardant, or may contain two or more. When two or more are contained, the total amount thereof preferably falls within the above range.

The thickness of the acrylic resin layer is preferably 50 μm or more, more preferably 100 μm or more, and much more preferably 150 μm or more. By setting the thickness to the lower limit or more, forming becomes easier and the hardness tends to be improved. Also, the upper limit of the thickness of the acrylic resin layer is preferably 1000 μm or less, more preferably 750 μm or less, and much more preferably 500 μm or less.

<Method for producing multilayered article>

The multilayered article of the present embodiment can be produced according to a known method.

The multilayered article of the present embodiment, for example, can be formed by using a main extruder for extruding a composition for forming a polycarbonate resin layer and a sub-extruder for extruding a composition for forming an acrylic resin layer, melting the resins under the conditions for the respective resins, extruding them to lead them to a die, and laminating them to form a sheet in the die, or forming sheets and then laminating them to form a base material. Furthermore, it can be produced by applying and curing a composition for forming an infrared absorbing layer on the polycarbonate resin layer side of the base material.
The multilayered article of the present embodiment may be used as it is, or may be subjected to processing, particularly thermal processing, to prepare a formed article.

<Uses>

The multilayered article of the present embodiment can be preferably used for optical parts, design products, anti-reflection formed articles, and the like.
The multilayered article of the present embodiment is preferably used for display devices, electrical and electronic equipment, OA equipment, personal digital assistants, machine parts, household appliances, vehicle parts, various containers, parts of lighting equipment or the like, etc. Among these, it is particularly preferably used for housings of various displays, electrical and electronic equipment, OA equipment, personal digital assistants and household appliances, lighting equipment and vehicle parts (particularly vehicle interior parts), surface films of smartphones, touch panels and the like, optical materials, and optical disks. Especially, the multilayered article of the present embodiment is preferably used as a dustproof cover for a head-up display.

## Examples

Hereinafter, the present invention will be more specifically described with reference to examples. The materials, the amounts used, the proportions, the processing contents, the processing procedure, etc. shown in the following examples can be appropriately modified as long as not departing from the subject matter of the present invention. Therefore, the scope of the present invention is not limited to the specific examples shown below.
When measuring equipment and the like used in the examples are difficult to obtain because of product discontinuation or the like, other equipment having equivalent performance can be used for the measurement.

### 1. Starting materials

SMP-220A: acryloyl group-containing polymer, solid content 50% by mass, weight average molecular weight 20,000, acrylic equivalent 220 g/mol, manufactured by Kyoeisha Chemical Co., Ltd.
UN-901T: urethane acrylate, solid content 80% by mass, weight average molecular weight 4,000, number of functional groups 9, manufactured by Negami Chemical Industrial Co., Ltd.
PE3A: polyfunctional acrylate, solid content 100% by mass, molecular weight 298, number of functional groups 3, manufactured by Kyoeisha Chemical Co., Ltd.
PE4A: polyfunctional acrylate, solid content 100% by mass, molecular weight 352, number of functional groups 4, manufactured by Kyoeisha Chemical Co., Ltd.
YMF-02A: CWO (cesium tungsten oxide) dispersion, CWO content 18.5% by mass, manufactured by Sumitomo Metal Mining Co., Ltd.
BYK-UV3575: silicone-based leveling agent, manufactured by BYK
PGM: propylene glycol monomethyl ether
Omnirad 819: acylphosphine oxide-based photopolymerization initiator, solid content mass 100%, manufactured by IGM RESINS B.V.
DF02U: two-layer film composed of a polycarbonate resin layer and an acrylic resin layer, manufactured by Mitsubishi Gas Chemical Company, Inc., thickness 0.375 mm
E-2000F: polycarbonate resin obtained by interfacial polymerization using bisphenol A as a starting material (manufactured by Mitsubishi Gas Chemical Company, Inc., E-2000F, viscosity average molecular weight: 27,000, Tg: 150°C)
KSS-FR: manufactured by Arichem Limited, KSS-FR, potassium diphenyl sulfone-3-sulfonate
NATS: manufactured by Tokyo Chemical Industry Co., Ltd., NATS, sodium p-toluenesulfonate
F-114P: manufactured by DIC Corporation, F-114P, potassium perfluorobutanesulfonate
2112: tris(2,4-di-tert-butylphenyl)phosphite (phosphorus-based antioxidant, ADK STAB 2112 manufactured by ADEKA CORPORATION)
S-100A: glycerol monostearate (Rikemal S-100A manufactured by Riken Vitamin Co., Ltd.)
80HD: manufactured by Asahi Kasei Corp., polymethyl methacrylate

2. Examples 1 to 9 and Comparative Examples 1 to 4

<Preparation of multilayered article (application of infrared absorbing layer)>

For the composition for forming an infrared absorbing layer, the components shown in Table 1 to Table 2 were blended. In Table 1 to Table 2, the proportion of each component indicates the solid content (parts by mass).
The composition for forming an infrared absorbing layer obtained as described above was applied to the coating surface of the base material shown in Table 1 to Table 2 using a bar coater. The applied composition for forming an infrared absorbing layer was dried in an oven at 80°C for 3 minutes, and then cured under a nitrogen atmosphere using an ultraviolet ray irradiator manufactured by Heraeus Group, so that the integrated light volume became 500 mJ/cm2 (a UV illuminometer manufactured by ORC Manufacturing Co., Ltd., measurement wavelength 360 nm).

<Total light transmittance (%)>

The total light transmittance of the multilayered article was measured using "HM-150" manufactured by Murakami Color Research Laboratory.

<Transmittance (%) at wavelength of 1000 nm>

The light transmittance of the multilayered article at a wavelength of 1000 nm was measured.
For the measurement of light transmittance, a spectrophotometer U-4000 manufactured by Hitachi High-Tech Corporation was used.

<Haze (%) of multilayered article after weather resistance test>

The acrylic resin layer side of the multilayered article was used as the irradiation surface, and light irradiation was carried out under the following conditions.

Apparatus: SUV-W161 manufactured by Iwasaki Electric Co., Ltd.
Light source: metal halide lamp
Test environment: 85°C (black panel temperature), 50%RH
Illuminance: 100 mW/$cm^2$ (365 nm)
Irradiation cycle: 24 hours (continuous irradiation)
Irradiation time: 200 hours

The haze of the multilayered article was evaluated in accordance with JIS K 7136:2000.
For the measurement of haze, "HM-150" manufactured by Murakami Color Research Laboratory was used. The unit was expressed in %.

<Adhesion>

The adhesion of the infrared absorbing layer to the base material was evaluated according to the evaluation method of JIS K 5600-5-6:1999. In Examples and Comparative Examples where the evaluation result was classified as 0, the adhesion was evaluated as "A", and in those where the evaluation result was classified as 1 to 5, the adhesion was evaluated as "C".

<Heat resistance test>

The prepared laminate was heated in an oven at 120°C for 5 minutes, and the degree of cracking was evaluated as follows. The evaluation was visually performed, and five experts checked it and made a judgment by majority vote.

A: No cracking observed
B: Slight cracking observed
C: Significant cracking observed

<FMVSS Test>

Regarding the multilayered article obtained above, a test piece (350 mm × 100 mm × 0.375 mm) was contacted

with burner flame of 38 mm for 15 seconds from the right edge of the test piece using a FMVSS No 302 flammability tester, and a burning rate in the burning distance of 254 mm as a gauge length was measured. Measurement was carried out by a test jig without wire, and the result was evaluated as follows.

A: The test piece does not ignite or self-extinguishes before the standard line A
B: The test piece self-extinguishes within a burning distance of 51 mm (and within 60 seconds) from the standard line A
C: The test piece burns up to the standard line B, but the burning rate is 102 mm/min or less
D: The test piece burns up to the standard line B, and the burning rate is faster than 102 mm/min

[Table 1]

| | | Example 1 | Example 2 | Example 3 | Example 4 | Example 5 | Example 6 | Example 7 |
|---|---|---|---|---|---|---|---|---|
| Composition for forming infrared absorbing layer [parts by mass] | SMP-220A(Mw:20,000) | 0.84 | 1.05 | | | | | |
| | UN-901T(Mw:4,000) | | | 1.50 | 1.88 | 1.88 | 1.88 | 1.88 |
| | PE3A (Mw:298) | 0.78 | 0.97 | | | | | |
| | PE4A(Mw:352) | | | | | | | |
| | YMF-02A | 6.50 | 5.00 | 6.50 | 5.00 | 5.00 | 5.00 | 5.00 |
| | Omnirad 184 | 0.075 | 0.075 | 0.075 | 0.075 | 0.075 | 0.075 | 0.075 |
| | BYK-UV3575 | 0.025 | 0.025 | 0.025 | 0.025 | 0.025 | 0.025 | 0.025 |
| | PGM | 1.88 | 2.98 | 2.00 | 3.13 | 3.13 | 3.13 | 3.13 |
| Base material | | DF02U | DF02U | DF02U | DF02U | DF02U | DF02U | DF02U |
| Coating surface | | PMMA surface | PMMA surface | PMMA surface | PMMA surface | PMMA surface | PMMA surface | PMMA surface |
| CWO content in infrared absorbing layer | [% by mass] | 46 | 36 | 46 | 36 | 36 | 36 | 36 |
| Film thickness of infrared absorbing layer | [μm] | 2.6 | 2.5 | 2.5 | 5.0 | 2.5 | 1.6 | 0.8 |
| Haze | [%] | 0.3 | 0.4 | 0.4 | 0.5 | 0.3 | 0.1 | 0.1 |
| Evaluation result | Total light transmittance [%] | 71.8 | 73.8 | 71.5 | 66.5 | 75.4 | 79.4 | 83.2 |
| | Transmittance [%] at 1000 nm | 6.1 | 9.7 | 6.0 | 3.0 | 13.2 | 19.5 | 42.1 |
| | Haze [%] after weather resistance test | 5.4 | 6.4 | 4.1 | 4.4 | 3.8 | 3.2 | 2.2 |
| | Adhesion | A | A | A | A | A | A | A |
| | Heat resistance test | B | B | A | A | A | A | A |
| | FMVSS | D | D | D | D | D | D | D |

[Table 2]

| | | Example 8 | Example 9 | Comparative Example 1 | Comparative Example 2 | Comparative Example 3 | Comparative Example 4 |
|---|---|---|---|---|---|---|---|
| Composition for forming infrared absorbing layer [parts by mass] | SMP-220A(Mw:20,000) | | | 1.40 | | | |
| | UN-901T(Mw:4,000) | 2.19 | 1.88 | | 2.5 | 1.25 | |
| | PE3A (Mw:298) | | | 1.30 | | | |
| | PE4A(Mw:352) | | | | | | 1.68 |
| | YMF-02A | 3.75 | 5.00 | 2.5 | 2.5 | 7.5 | 4.13 |
| | Omnirad 184 | 0.075 | 0.075 | 0.075 | 0.075 | 0.075 | 0.075 |
| | BYK-UV3575 | 0.025 | 0.025 | 0.025 | 0.025 | 0.025 | 0.025 |
| | PGM | 4.06 | 3.13 | 4.80 | 5.00 | 1.25 | 4.2 |
| Base material | | DF02U | DF02U | DF02U | DF02U | DF02U | DF02U |
| Coating surface | | PMMA surface | PC surface | PMMA surface | PMMA surface | PMMA surface | PMMA surface |
| CWO content in infrared absorbing layer | [% by mass] | 27 | 36 | 18 | 18 | 53 | 29 |
| Film thickness of infrared absorbing layer | [μm] | 5.2 | 2.5 | 5.0 | 5.2 | 2.5 | 5.5 |
| Haze | [%] | 0.5 | 0.2 | 2.9 | 0.8 | 0.2 | 23.7 |

(continued)

| | | Example 8 | Example 9 | Comparative Example 1 | Comparative Example 2 | Comparative Example 3 | Comparative Example 4 |
|---|---|---|---|---|---|---|---|
| Evaluation result | Total light transmittance [%] | 71.3 | 75.6 | 73.9 | 77.1 | 67.2 | 76.6 |
| | Transmittance [%] at 1000 nm | 5.9 | 13.6 | 12.6 | 18.9 | 3.4 | 20.1 |
| | Haze [%] after weather resistance test | 8.6 | 0.7 | 62.0 | 18.5 | 3.9 | 45.2 |
| | Adhesion | A | A | A | A | C | A |
| | Heat resistance test | A | A | A | A | A | C |
| | FMVSS | D | D | D | D | D | D |

3. Examples 10 to 12

<Production of flame resistant base material>

A resin composition (pellets) for forming a polycarbonate resin layer (PC layer) and a resin composition (pellets) for forming an acrylic resin layer were produced in accordance with the following methods.

The components described above were measured so as to obtain the additive amounts described in Table 3 (the amounts of the components in Table 3 are each expressed in % by mass). Thereafter, they were mixed with a tumbler for 15 minutes, then melt kneaded by a vented twin screw extruder ("TEX30α" manufactured by The Japan Steel works, Ltd.) having a screw diameter of 32 mm, and subjected to strand cutting to obtain pellets. For the resin composition (pellets) for forming a polycarbonate resin layer, melt kneading was carried out while timely changing the temperature between 260 to 300°C depending on the resin viscosity, and for the resin composition (pellets) for forming an acrylic resin layer, melt kneading was carried out at 260°C.

Using a single screw extruder having a shaft diameter of 32 mm, a single screw extruder having a shaft diameter of 65 mm, and a multilayer extruder having a feed block connected to all the extruders and a T-die having a width of 650 mm connected to the feed block, a flame resistant base material was formed. Into a single screw extruder having a shaft diameter of 32 mm, the resin composition (pellets) for an acrylic resin layer of each flame resistant base material shown in the table was introduced, and it was extruded under the conditions of a cylinder temperature of 240°C and a discharge rate of 0.3 to 6.4 kg/h. Further, into a single screw extruder having a shaft diameter of 65 mm, the resin composition (pellets) for forming a polycarbonate resin layer of each flame resistant base material shown in Table 1 was continuously introduced, and it was extruded at a discharge rate of 17.4 to 23.5 kg/h while timely changing the cylinder temperature to 250°C to 290°C depending on the resin viscosity. The feed block connected to all the extruders had distribution pins of two types and two layers, and compositions were extruded and laminated. By means of a T-die connected beyond that, the compositions were extruded into sheets, and the sheets were cooled while transferring a mirror surface thereon with three mirror finish rolls set at temperatures of 120°C, 120°C, and 140°C from the upstream side, thereby obtaining each flame resistant base material.

<Preparation of multilayered article (application of infrared absorbing layer)>

The same composition for forming an infrared absorbing layer as in Example 9 was applied to the surface of the polycarbonate resin layer of the base material layer obtained as described above, dried in an oven at 80°C for 3 minutes, and then cured in a nitrogen atmosphere using a UV irradiator manufactured by Heraeus Group, so that the integrated light volume became 500 mJ/$cm^2$ (a UV illuminometer manufactured by ORC Manufacturing Co., Ltd., measurement wavelength 360 nm).

<Evaluation>

In the same manner as in Example 1, the total light transmittance, the transmittance at a wavelength of 1000 nm, the haze after the weather resistance test, the adhesion, the heat resistance test, and the FMVSS were evaluated.

[Table 3]

| | | Example 10 | Example 11 | Example 12 |
|---|---|---|---|---|
| Base material PC layer [parts by mass] | E2000F | 99.86 | 99.86 | 99.86 |
| | KSS-FR | 0.1 | | |
| | NATS | | 0.1 | |
| | F-114P | | | 0.1 |
| | 2112 | 0.03 | 0.03 | 0.03 |
| | S-100A | 0.01 | 0.01 | 0.01 |
| Base material acrylic layer | 80HD | 100 | 100 | 100 |
| Coating surface | | PC surface | PC surface | PC surface |
| Composition for forming infrared absorbing layer | | Same as Example 9 | Same as Example 9 | Same as Example 9 |

(continued)

| | | Example 10 | Example 11 | Example 12 |
|---|---|---|---|---|
| Film thickness of infrared absorbing layer | [μm] | 2.5 | 2.5 | 2.5 |
| Haze | [%] | 0.2 | 0.2 | 0.2 |
| Evaluation result | Total light transmittance [%] | 75.5 | 76.0 | 75.6 |
| | Transmittance [%] at 1000 nm | 13.4 | 14.1 | 13.6 |
| | Haze [%] after weather resistance test | 0.9 | 0.8 | 0.7 |
| | Adhesion | A | A | A |
| | Heat resistance test | A | A | A |
| | FMVSS | B | B | B |

4. Examples 13 to 16

<Preparation of multilayered article having infrared absorbing layer>

A multilayered article having an infrared absorbing layer was prepared by the same method as in Example 9 or the same method as in Example 10.

<Coating of hard coat layer on opposite surface>

For the multilayered article prepared as described above, a hard coat layer was applied to the surface opposite to the surface where the infrared absorbing layer had been provided.

In Table 4, a and b indicate resin compositions used for a hard coat layer, and the following resin compositions were used.

a: HO3313U-10 manufactured by Fujikura Kasei Co., Ltd.

b: A resin composition for a hard coat layer in which 67.5% by mass of UN-3320HC manufactured by Negami Chemical Industrial Co., Ltd., 29.0% by mass of silica particles that had been surface-treated with 3-acryloxypropyltrimethoxysilane, 2.5% by mass of a photoinitiator, and 1% by mass of a leveling agent were mixed

The above resin composition for a hard coat layer was applied by a bar coater to the outermost surface (surface of the acrylic resin layer) on a side opposite to the side where the infrared absorbing layer of the multilayered article had been provided. The applied resin composition for a hard coat layer was dried in an oven at 80°C for 3 minutes, and then cured in a nitrogen atmosphere using an ultraviolet ray irradiator manufactured by Heraeus Group, so that the integrated light volume became 500 $mJ/cm^2$ (a UV illuminometer manufactured by ORC Manufacturing Co., Ltd., measurement wavelength 360 nm) to prepare a hard coat layer having a thickness of 4.5 μm.

<Evaluation>

In the same manner as in Example 1, the total light transmittance, the transmittance at a wavelength of 1000 nm, the haze after the weather resistance test, the adhesion, the heat resistance test, and the FMVSS were evaluated.

[Table 4]

| | | Example 13 | Example 14 | Example 15 | Example 16 |
|---|---|---|---|---|---|
| Base material | | Example 9 | Example 9 | Example 10 | Example 10 |
| HC layer paint | | a | b | a | b |
| Haze [%] | | 0.3 | 0.2 | 0.3 | 0.2 |

(continued)

| | | Example 13 | Example 14 | Example 15 | Example 16 |
|---|---|---|---|---|---|
| Evaluation result | Total light transmittance [%] | 75.6 | 75.9 | 75.7 | 75.6 |
| | Transmittance [%] at 1000 nm | 13.7 | 13.8 | 13.7 | 13.6 |
| | Haze [%] after weather resistance test | 0.9 | 1.0 | 0.9 | 1.0 |
| | Adhesion | A | A | A | A |
| | Heat resistance test | A | A | A | A |
| | FMVSS | C | C | B | B |

In the above table, "HC layer paint" describes what kind of composition of a hard coat layer was provided on the surface of the acrylic resin layer, and a and b indicate the compositional features of the resin composition for a hard coat layer.

As is clear from the results of Table 1 to Table 4, the multilayered articles of the present invention exhibited low haze after the weather resistance test and excellent interlayer adhesion (Examples 1 to 16). Furthermore, the multilayered articles of the present invention had high total light transmittance, low near infrared transmittance, and excellent heat resistance. Moreover, when the flame resistant base materials were used (Examples 10 to 12, 15, and 16), the multilayered articles also exhibited excellent flame resistance.

Reference Signs List

1: multilayered article
2: acrylic resin layer
3: polycarbonate resin layer
4: infrared absorbing layer

## Claims

**1.** A multilayered article having a base material layer and an infrared absorbing layer,

the infrared absorbing layer comprising an ultraviolet curable resin and tungsten oxide,
the ultraviolet curable resin comprising a component derived from a polyfunctional (meth)acrylate having a weight average molecular weight of 1000 or more, and
the proportion of the tungsten oxide in the infrared absorbing layer being 25 to 50% by mass.

**2.** The multilayered article according to claim 1, wherein the ultraviolet curable resin comprises a component derived from a polyfunctional urethane (meth)acrylate.

**3.** The multilayered article according to claim 1 or 2,

wherein the base material layer comprises an acrylic resin layer and a polycarbonate resin layer, and
wherein the infrared absorbing layer is positioned on a surface of the polycarbonate resin layer on a side opposite to the acrylic resin layer.

**4.** The multilayered article according to any one of claims 1 to 3, wherein the haze as measured in accordance with JIS K 7136 is 2.0% or less.

**5.** The multilayered article according to any one of claims 1 to 4, wherein the infrared absorbing layer comprises 30 to 50% by mass of the tungsten oxide.

**6.** The multilayered article according to any one of claims 1 to 5,

wherein the multilayered article further has a hard coat layer, and
wherein the infrared absorbing layer, the polycarbonate resin layer, the acrylic resin layer, and the hard coat layer are laminated in this order.

**7.** The multilayered article according to claim 6, comprising inorganic particles in the hard coat layer.

**8.** The multilayered article according to any one of claims 1 to 7, further having an antireflective layer.

**9.** The multilayered article according to any one of claims 1 to 8, further having a polarization layer.

**10.** A dustproof cover for a head-up display, comprising the multilayered article according to any one of claims 1 to 9.

[Figure 1]

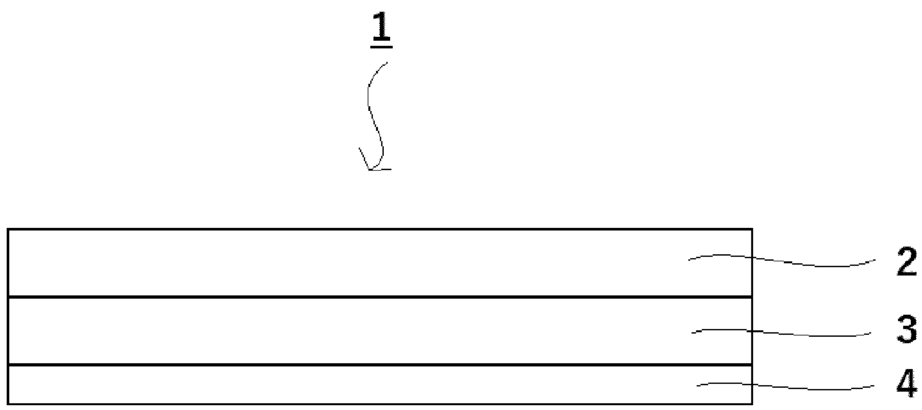

**INTERNATIONAL SEARCH REPORT**

International application No.
**PCT/JP2024/034227**

**A. CLASSIFICATION OF SUBJECT MATTER**

***B32B 27/18***(2006.01)i; ***B32B 27/30***(2006.01)i; ***B32B 27/36***(2006.01)i; ***C08J 7/04***(2020.01)i; ***G02B 5/22***(2006.01)i
FI: B32B27/18 Z; B32B27/30 A; B32B27/36 102; C08J7/04 Z CEY; G02B5/22

According to International Patent Classification (IPC) or to both national classification and IPC

**B. FIELDS SEARCHED**

Minimum documentation searched (classification system followed by classification symbols)

B32B1/00-43/00; C08J7/04-7/06; G02B5/20-5/28

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-159120 A (JSR CORPORATION) 19 September 2019 (2019-09-19) entire text, all drawings | 1-10 |
| A | WO 2021/045185 A1 (PANASONIC INTELLECTUAL PROPERTY MANAGEMENT CO., LTD.) 11 March 2021 (2021-03-11) entire text, all drawings | 1-10 |
| A | JP 2020-95193 A (KONICA MINOLTA INC.) 18 June 2020 (2020-06-18) entire text, all drawings | 1-10 |
| A | JP 2010-164713 A (NOF CORPORATION) 29 July 2010 (2010-07-29) entire text, all drawings | 1-10 |
| A | JP 2016-538700 A (SAMSUNG SDI CO., LTD.) 08 December 2016 (2016-12-08) entire text, all drawings | 1-10 |
| A | JP 2023-110548 A (NITTO DENKO CORPORATION) 09 August 2023 (2023-08-09) entire text, all drawings | 1-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 December 2024** | **17 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/034227**

**C. DOCUMENTS CONSIDERED TO BE RELEVANT**

| Category* | Citation of document, with indication, where appropriate, of the relevant passages | Relevant to claim No. |
|---|---|---|
| A | JP 2021-55056 A (CHUGOKU MARINE PAINTS, LTD.) 08 April 2021 (2021-04-08) entire text, all drawings | 1-10 |

Form PCT/ISA/210 (second sheet) (July 2022)

**INTERNATIONAL SEARCH REPORT**
**Information on patent family members**

International application No.
**PCT/JP2024/034227**

| Patent document cited in search report | Publication date (day/month/year) | Patent family member(s) | Publication date (day/month/year) |
|---|---|---|---|
| JP 2019-159120 A | 19 September 2019 | KR 10-2019-0108054 A<br>TW 201938698 A | |
| WO 2021/045185 A1 | 11 March 2021 | CN 114364725 A<br>KR 10-2022-0058545 A<br>CN 117304543 A | |
| JP 2020-95193 A | 18 June 2020 | (Family: none) | |
| JP 2010-164713 A | 29 July 2010 | (Family: none) | |
| JP 2016-538700 A | 08 December 2016 | WO 2015/080493 A1<br>KR 10-2015-0062090 A<br>TW 201529337 A<br>CN 105980161 A | |
| JP 2023-110548 A | 09 August 2023 | (Family: none) | |
| JP 2021-55056 A | 08 April 2021 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016060100 A
- WO 2021215435 A
- JP 2007179018 A
- WO 2023095664 A
- WO 2022102736 A
- JP 2010106268 A
- JP 2009013115 A
- JP 2005154312 A
- JP 2022104214 A
- JP 7021724 B
- JP 2013020130 A
- JP 2018103518 A
- JP 2017213771 A
- JP 2023114940 A
- JP 2022174051 A
- JP 2021081596 A
- JP 2008105225 A
- JP 2020052406 A
- JP 2023013533 A
- JP 2022080270 A
- JP 2012144604 A
- JP 2019002023 A
- JP 2018090677 A
- JP 2018188496 A
- JP 2017031313 A
- WO 2015190162 A